# EUROPÄISCHE PATENTSCHRIFT

(11) **EP 1 902 886 B1**
(45) Veröffentlichungstag und Bekanntmachung des Hinweises auf die Patenterteilung: **02.03.2011**
(21) Anmeldenummer: 07450156.0
(22) Anmeldetag: 11.09.2007
(51) Int. Cl.: B60J 7/16

(54) **Dach für einen Lastkraftwagen oder Anhänger**
Roof for a truck or trailer
Toit pour un poids lourds ou une remorque

(30) Priorität: 19.09.2006 AT 15602006
(43) Veröffentlichungstag der Anmeldung: 26.03.2008
(73) Patentinhaber: Peischl Fahrzeugbau Gesellschaft m.b.H., 7551 Stegersbach (AT)
(72) Erfinder: Peischl, Ernst, 7551 Stegersbach (AT)
(74) Vertreter: Ellmeyer, Wolfgang

(56) Entgegenhaltungen:
- GB-A- 2 318 557
- JP-A- 62 001 629
- JP-U- 60 020 411
- NL-A- 9 300 988
- US-A- 2 979 361

## Beschreibung

Die Erfindung bezieht sich auf ein Dach für einen Lastkraftwagen oder Anhänger mit einem von oben befüllbaren Laderaum, das den gesamten Laderaum überdeckt und aus einem eine Stoffbespannung haltenden Dachrahmen besteht, wobei zum Schwenken des Daches über eine obere Kante des Laderaumes nach unten beidseitig je ein Arm vorgesehen ist, der einerseits am Dach und andererseits im oberen Bereich des Laderaumes angelenkt ist und an wenigstens einem Arm ein hydraulischer Motor, vorzugsweise ein Schubmotor angreift.

Von oben in den Laderaum einzufüllende Schüttgüter sind z.B. Sägespäne, Hackschnitzel und dergleichen. Die Entladung der Schüttgüter erfolgt entweder durch Kippen des gesamten Laderaumes oder zweckmäßiger über hintere Türen und einen Schiebeboden, durch den das Schüttgut durch die geöffneten Türen hinausgeschoben wird.

In der EP 1477 353 A2 ist ein Dach der eingangs genannten Art beschrieben, das sich schon vielfach bewährt hat. Zur Führung des Daches ist dieses vorne und hinten mit Führungen versehen, die mit an einer oberen Kante des Laderaumes angeordneten Gegenführungen zusammenwirken. Das Dach besteht aus einem Dachrahmen mit Querstreben und einer darüberliegenden Stoffbahn.

Als Nachteil des bekannten Daches hat sich erwiesen, dass bei einer zu großen Füllung des Laderaumes die Querstreben sich auf das Schüttgut auflegen und das Dach nicht mehr ganz geschlossen werden kann.

Die Erfindung hat es sich zum Ziel gesetzt, ein Dach der oben genannten Art zu schaffen, wobei ein Schließen des Daches im wesentlichen immer möglich ist. Erreicht wird dies dadurch, dass der Dachrahmen ohne Querstreben ausgebildet ist, und dass an der der Anlenkung der Arme gegenüberliegenden Seite des Daches mindestens ein Führungsarm an der Längsseite des Daches angelenkt ist, der außen an einer Seite am Laderaum zwischen einer nach oben weisenden und einer nach unten weisenden Stellung schwenkbar ist.

Ein erfindungsgemäß ausgebildetes Dach wird daher zwangsläufig geführt und kann nicht, wie bisher, durch das zu hoch eingefüllte Schüttgut hochgehoben werden. Ein Schließen des Daches ist damit immer gewährleistet.

In der NL 9 300 988 A ist ein Transportbehälter beschrieben, dessen von oben befüllbarer Laderaum durch zwei symmetrisch zur Längsachse des Behälters schwenkbare Dachhälften abdeckbar ist. Die Dachhälften bestehen offenbar je aus einem durchgehenden Blech od. dgl. und werden beim Schließen oder Öffnen des Daches durch an beiden Seiten des Behälters angeordnete Arme geführt, wobei der Antrieb über Seile erfolgt.

Ein solches Dach ist kompliziert aufgebaut und umständlich zu bedienen. Die der Erfindung zugrunde liegende Aufgabe kann durch dieses Dach nicht gelöst werden.

In Weiterbildung der Erfindung ist der ohne Querstreben ausgebildete Dachrahmen an den Ecken durch Verstrebungsplatten versteift. Durch den Wegfall von Querstreben wird eine Behinderung durch zu hoch eingefülltes Schüttgut vermieden.

Im Rahmen der Erfindung besitzen die Verstrebungsplatten annähernd einen dreieckförmigen Grundriß. Überdies besitzen sie vorteilhaft einen wellenförmigen Querschnitt. Durch diese Ausbildungen wird eine sichere Versteifung des Dachrahmens auch ohne Querstreben erreicht.

Eine Abdichtung des Daches kann dadurch erfolgen, dass längs der oberen Seitenkanten des Laderaumes, vorzugsweise elastische, schräg nach oben weisende Dichtungen angeordnet sind, die mit Gegendichtungen am Dachrahmen im geschlossenen Zustand des Daches zusammenwirken.

Nachstehend ist die Erfindung anhand eines in den Zeichnungen dargestellten Ausführungsbeispieles näher beschrieben, ohne auf dieses Ausführungsbeispiel beschränkt zu sein. Dabei zeigen:
- Fig. 1: schematisch in Seitenansicht ein erfindungsgemäßes Dach in geschlossener Stellung;
- Fig. 2: das Dach nach Fig. 1 in einer Mittelstellung;
- Fig. 3: das in den Fig. 1 und 2 dargestellte Dach knapp vor Erreichen der Offenstellung;

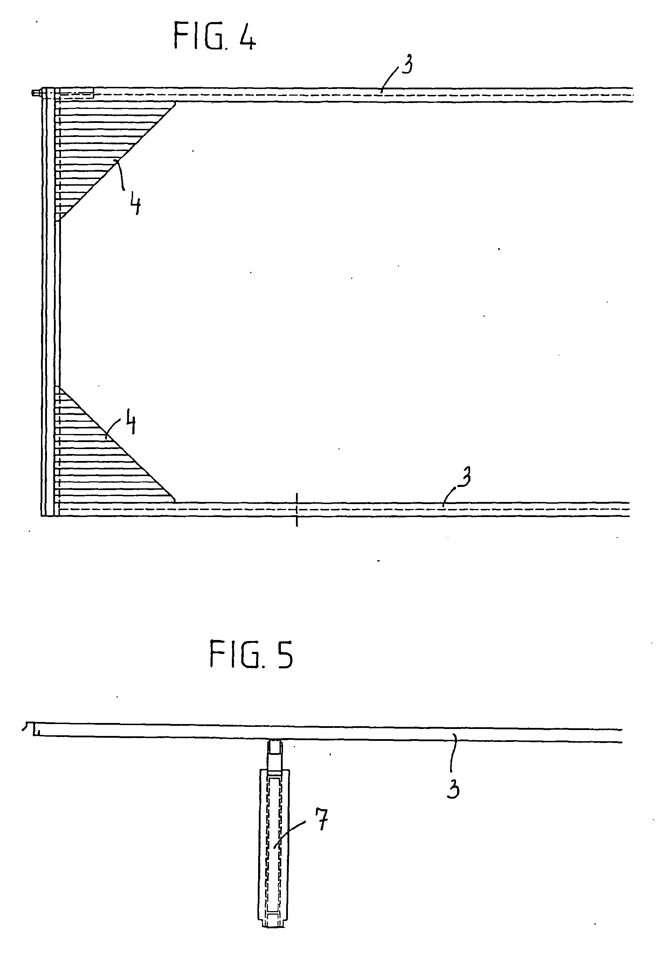

- Fig. 4: eine Draufsicht auf einen Teil des erfindungsgemäßes Daches und
- Fig. 5: eine schematische Seitenansicht des Daches nach Fig. 4.

Gemäß den Zeichnungen ist zur Abdeckung des Laderaumes 1 eines Lastkraftwagens oder Anhängers ein Dach 2 angeordnet. Das Dach 2 besteht aus einem Dachrahmen 3, an dessen Ecken Verstrebungsplatten 4 eingesetzt sind. Querstreben sind keine vorhanden. Der Dachrahmen 3 kann z.B. aus runden Rohren, Formrohren oder verschweißten Kastenprofilen bestehen. Der Dachrahmen 3 wird von einer Stoffbespannung (nicht dargestellt) überdeckt.

An der vorderen und hinteren Seite des Daches 2 greift je ein Arm 5 an, dessen anderes Ende im oberen Bereich des Laderaumes 1 angelenkt ist. An mindestens einem der beiden Arme 5 greift ein hydraulischer Schubmotor 6 an, der ebenfalls im oberen Bereich des Laderaumes 1 schwenkbar gelagert ist.

An der der Anlenkung der Arme 5 gegenüberliegenden Seite des Daches 2 ist mindestens ein Führungsarm 7 angelenkt, der außen am Laderaum 1 zwischen einer nach oben weisenden und einer nach unten weisenden Stellung schwenkbar ist. Bei einem Versuchsfahrzeug sind drei Führungsarme 7 an der Seitenwand des Laderaumes 1 verteilt angeordnet.

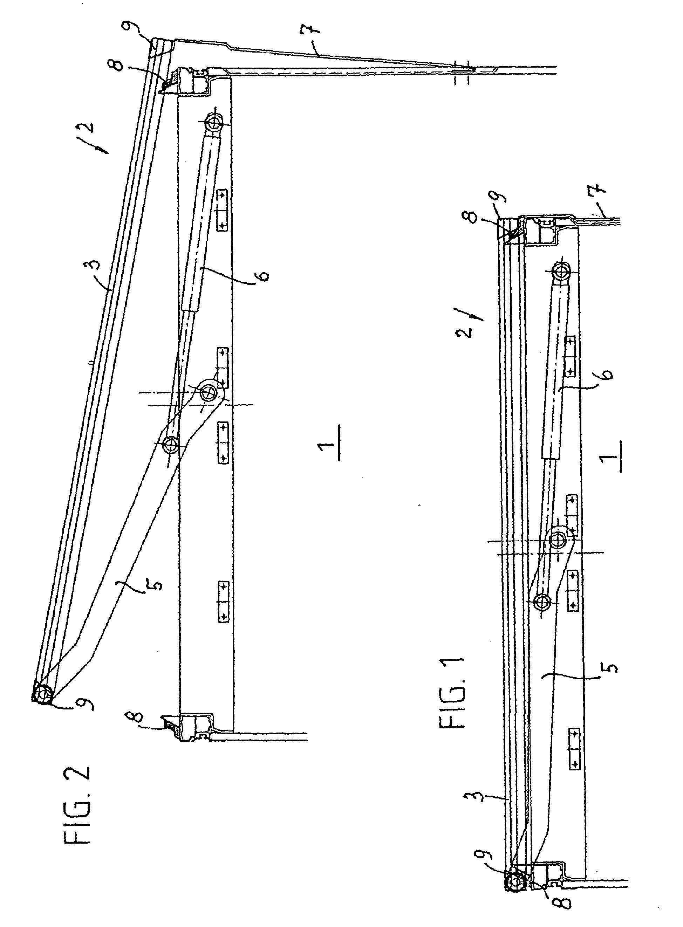

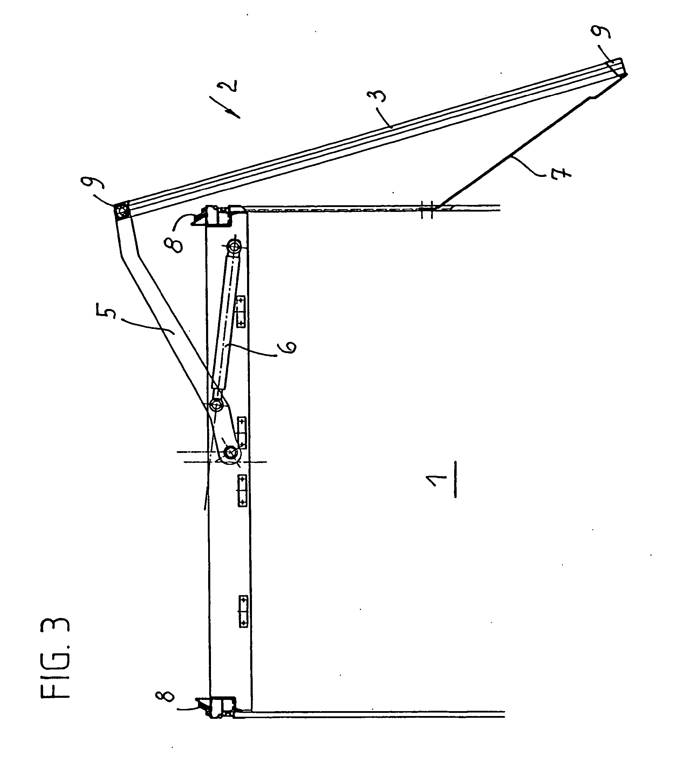

Das Dach 2 ist somit zwischen der geschlossenen Stellung nach Fig. 1 und der offenen Stellung, knapp nach der in Fig. 3 gezeigten Stellung, zwangsläufig geführt, ohne dass die obere Kante des Laderaumes 1 berührt wird.

Um eine Dichtheit des geschlossenen Daches zu erreichen, sind längs der oberen Seitenkanten des Laderaumes 1 vorzugsweise elastische, schräg nach oben weisende Dichtungen 8 angeordnet, die im geschlossenen Zustand des Daches 2 mit Gegendichtungen 9 zusammenwirken.

Im Rahmen der Erfindung sind zahlreiche Abänderungen möglich. So kann statt der hydraulischen Schubmotoren 6 auch ein insbesondere hydraulischer Drehmotor zur Bewegung des Armes oder der Arme 5 angeordnet werden.

## Patentansprüche

1. Dach für einen Lastkraftwagen oder Anhänger mit einem von oben befüllbaren Laderaum (1) für Schüttgut, das den gesamten Laderaum (1) überdeckt und aus einem eine Stoffbespannung haltenden Dachrahmen besteht, wobei zum Schwenken des Daches (2) über eine obere Kante des Laderaumes (1) nach unten je ein an der vorderen und hinteren Seite des Daches (2) angreifender Arm (5) vorgesehen ist, der einerseits am Dach (2) und andererseits im oberen Bereich des Laderaumes (1) angelenkt ist und an wenigstens einem Arm (5) ein hydraulischer Motor vorzugsweise ein Schubmotor (6) angreift, **dadurch gekennzeichnet,**
- **dass** der Dachrahmen (3) ohne Querstreben ausgebildet ist, sodass ein zu hoch eingefülltes Schüttgut das Schließen des Daches (2) nicht behindert,
- **dass** an der der Anlenkung der durch den die Stoffbespannung haltenden Dachrahmen (3) verbundenen Arme (5) gegenüberliegenden Seite des Daches (2) mindestens ein Führungsarm (7) an der Längsseite des Daches (2) angelenkt ist, der außen an einer Seite am Laderaum (1) zwischen einer nach oben weisenden und einer nach unten weisenden Stellung schwenkbar ist.

2. Dach nach Anspruch 1, **dadurch gekennzeichnet, dass** der Dachrahmen (3) an den Ecken durch Verstrebungsplatten (4) versteift ist.

3. Dach nach Anspruch 1, **dadurch gekennzeichnet, dass** die Verstrebungsplatten (4) annähernd einen dreieckförmigen Grundriss besitzen.

4. Dach nach Anspruch 2 oder 3, **dadurch gekennzeichnet, dass** die Verstrebungsplatten (4) einen wellenförmigen Querschnitt besitzen.

5. Dach nach einem der Ansprüche 1 bis 4, **dadurch gekennzeichnet, dass** längs der oberen Seitenkanten des Laderaumes (1) vorzugsweise elastische, schräg nach oben weisende Dichtungen (8) angeordnet sind, die mit Gegendichtungen (9) am Dachrahmen (3) im geschlossenen Zustand des Daches (2) zusammenwirken.

## Claims

1. A roof for a truck or a trailer with a cargo space (1) for bulk material which may be filled from the top, said roof covering the overall cargo space (1) and consisting of a roof frame holding a fabric cover, arms (5), one of them coupled to the front side, the other one coupled to the back side of the roof (2), being provided for pivoting said roof (2) downwards over a top edge of said cargo space (1), said arms being pivotally coupled to said roof (2) and to the top area of said cargo space (1) and a hydraulic motor, preferably a thrust motor, being coupled to at least one arm (5), **characterised in**
- **that** said roof frame (3) is formed without cross struts, so that bulk material, the filling height of which is too high, does not impede the closing of said roof (2),
- **that** at the side of said roof (2) opposite the coupling points of said arms (5), which are connected by said roof frame (3) holding said fabric cover, at least one guiding arm (7) which, at one external side of said cargo space (1), is pivotable between an upwardly and a downwardly pointing position is pivotally coupled to the long side of said roof (2).

2. The roof according to claim 1, **characterised in that** said roof frame (3) is strutted by means of strut plates (4) in its corners.

3. The roof according to claim 1, **characterised in that** said strut plates (4) are approximately triangular in plan view.

4. The roof according to claim 2 or claim 3, **characterised in that** said strut plates (4) are undulated in cross section.

5. The roof according to any one of the claims 1 to 4, **characterised in that** preferably elastic seals (8) pointing diagonally upwards are disposed along the top lateral edge of the cargo space (1), said seals interacting with opposed seals (9) mounted to the roof frame (3), when said roof (2) is closed.

## Revendications

1. Toit de voiture pour un camion ou une remorque avec un compartiment à marchandises (1) pour des matières en vrac qui est rempli par le dessus, ledit toit recouvrant l'ensemble dudit compartiment à marchandises (1) et consistant en un cadre de toit tenant une couverture en étoffe, des bras (5), l'un engageant à la face avant, l'autre à la face arrière du toit (2), étant prévus pour pivoter le toit (2) autour d'une arête supérieure du compartiment à marchandises (1), lesdits bras étant articulés au toit (2) et dans la section supérieure du compartiment à marchandises (1) et un moteur hydraulique, de préférence un moteur de poussée, étant relié à au moins un bras (2), **caractérisé**
- **en ce que** ledit cadre de toit (3) est formé sans contre-fiches transversales, ainsi que des matières en vrac avec une hauteur de remplissage trop haute n'empêchent pas la fermeture du toit (2),
- **en ce qu'**au moins un bras de guidage (7) est articulé au côté longitudinal du toit (2) au côté vis-à-vis de l'articulation des bras (5) qui sont reliés par ledit cadre de toit (3) tenant la couverture en étoffe, ledit bras de guidage (7) étant pivotable entre une position pointant vers le haut et une position pointant vers le bas à l'extérieur d'un côté du compartiment à marchandises (1).

2. Toit selon la revendication 1, **caractérisé en ce que** ledit cadre de toit (3) est renforcé dans ses coins par des plaques de renforcement (4).

3. Toit selon la revendication 1, **caractérisé en ce que** lesdites plaques de renforcement (4) présentent un plan approximativement triangulaire.

4. Toit selon la revendication 2 ou la revendication 3, **caractérisé en ce que** lesdites plaques de renforcement (4) présentent une section ondulée.

5. Toit selon l'une des revendications 1 à 4, **caractérisé en ce que** des calfeutrages (8), de préférence élastiques, qui pointent diagonalement vers le haut et qui fonctionnent en combinaison avec des calfeutrages opposés (9) présents sur le cadre de toit (3), sont disposés le longue de l'arête latérale du compartiment à marchandises (1).
